# EUROPEAN PATENT APPLICATION

(11) **EP 2 159 210 A2**
(43) Date of publication of application: **03.03.2010**
(21) Application number: 08169073.7
(22) Date of filing: 13.11.2008
(51) Int. Cl.: C05F 17/00, C05F 9/04, C02F 11/00

(54) **Method for production of granulated organic fertilizer from sludge obtained during methane fermentation**

(30) Priority: 02.09.2008 PL 38600808
(71) Applicant: Politechnika Lubelska, 20-219 Lublin (PL)
(72) Inventor: Pawlowski, Lucjan, 20-027 Lublin (PL); Pawlowska, Malgorzata, 20-027 Lublin (PL)
(74) Representative: Kaminski, Piotr

(57) **Abstract**

Method for production of granulated organic fertilizer from sludge after methane fermentation, containing heavy metal ions is **characterised in that** to the sludge after methane fermentation 2-5% glauconite as calculated per dry mass is introduced and following mixing the sludge is subjected to drying and granulation to obtain dry mass content of over 92%.

## Description

The present invention relates to a method for production of granulated organic fertilizer from sludge obtained during methane fermentation.

Sludge produced during municipal wastes treatment contains large quantities of biogenes and humus-producing substances. For plants, these compounds have good nutritive properties. However in many cases municipal wastes treated in biological waste treatment plants contain industrial wastes impurities, which are the source of heavy metals. During treatment, heavy metals contained in sewage accumulate in sewage sludge which because of risk of soil and surface water contamination makes it impossible to utilise the sludge as a fertiliser.

There are known methods for removal of heavy metals from sludge. Among others, Japanese patent JP2838339 presents a method, whereby the sludge is first dried and then treated with diluted HNO₃ in which compounds containing heavy metals dissolve. Subsequently the solution containing heavy metals is separated from the sludge. This method, though possible to carry out, poses troubles during separating the sludge from the solution.

Similar method was described in European patent EP558784, which involves heating up the dehydrated sludge up to 70-75 °C following by treating the heated sludge with mineral acid or organic acids, such acetic acid or citric acid. Subsequently the solution containing dissolved heavy metals salts is separated and the heavy metals free sludge after mixing with sawdust, milled leaves, milled cardboard or paper is granulated. The drawback of this method is the difficulty in complete separation of solution and the sludge.

The essence of the method for production of granulated organic fertilizer from sludge after methane fermentation, containing heavy metal ions is that to the sludge after methane fermentation 2-5% glauconite as calculated per dry mass is introduced and after mixing the sludge is subjected to drying and granulation to obtain dry mass content of over 92%.

The beneficial effect of the method according to the present invention is that heavy metal ions are effectively immobilised and hence prevents heavy metal ions from passing into surface water.

### Example:

After methane fermentation of sewage sludge - a sludge containing 15% dry mass was obtained. Glauconite was added to the sludge in the amount of 2% as calculated per dry mass of sludge and well mixed. Subsequently the sludge was dried in drum drier and granulate of dry mass content of 92% was obtained.

Studies of heavy metals elution from granulate were carried out for granulate produced from sludge after methane fermentation both with and without the addition of 2% glauconite,

The following results were obtained:

### Characteristics of water extracts of studied sludge:

| Studied metal ion | Without glauconite addition mg Me/dm³ | With glauconite addition mg Me/dm³ |
|---|---|---|
| Pb | 15 | 0,05 |
| Cd | 8 | 0,02 |
| Cu | 25 | 0,5 |
| Zn | 70 | 0,8 |

Presented results of water extracts show, that introduction of 2% glauconite effectively immobilizes heavy metal ions.

## Claims

1. Method for production of granulated organic fertilizer from sludge after methane fermentation containing heavy metal ions **characterised in that** to the sludge after methane fermentation 2-5% glauconite as calculated per dry mass is introduced and after mixing the sludge is subjected to drying and granulation to obtain dry mass content of over 92%.
